# EUROPEAN PATENT SPECIFICATION

(11) **EP 4 538 897 B1**
(45) Date of publication and mention of the grant of the patent: **28.10.2026**
(21) Application number: 23869516.7
(22) Date of filing: 28.03.2023
(51) Int. Cl.: G06F 13/16

(54) **STORAGE SCHEDULING METHOD AND APPARATUS, DEVICE, AND COMPUTER READABLE STORAGE MEDIUM**
SPEICHERPLANUNGSVERFAHREN UND VORRICHTUNG, VORRICHTUNG UND COMPUTERLESBARES SPEICHERMEDIUM
PROCÉDÉ ET APPAREIL DE PLANIFICATION DE STOCKAGE, DISPOSITIF, ET SUPPORT DE STOCKAGE LISIBLE PAR ORDINATEUR

(30) Priority: 29.09.2022 CN 202211219333
(43) Date of publication of application: 16.04.2025
(73) Proprietor: Sanechips Technology Co., Ltd., Shenzhen, Guangdong 518055 (CN)
(72) Inventor: HU, Yingjie, Shenzhen, Guangdong 518055 (CN); SHI, Jinfeng, Shenzhen, Guangdong 518055 (CN); SHEN, Rongrong, Shenzhen, Guangdong 518055 (CN); SHI, Yunlong, Shenzhen, Guangdong 518055 (CN)
(74) Representative: Savi, Massimiliano
(86) International application number: PCT/CN2023/084372
(87) International publication number: WO 2024/066257

(56) References cited:
- WO-A1-2021/128104
- CN-A- 101 246 460
- CN-A- 103 888 377
- CN-A- 108 984 280
- CN-A- 113 835 611
- US-A1- 2011 228 795

## Description

### TECHNICAL FIELD

The present application relates to the technical field of storage, and in particular to a storage scheduling method, a storage scheduling apparatus, a storage scheduling device and a computer-readable storage medium.

### BACKGROUND

When designing chips, the technology of collaborative caching of on-chip memory and off-chip memory is often used to improve bandwidth and storage capacity. Small-capacity, high-bandwidth on-chip memory (such as 256Mbit/3.6Tbps) is mainly used in conjunction with large-capacity, low-bandwidth off-chip memory (such as 4Gbit/1.2Tbps bandwidth) as a high-performance, low-cost cache management solution.

Since the capacity of the on-chip memory is relatively small, when the message accumulation in the on-chip memory reaches a certain threshold, the subsequent messages will be stored in the off-chip memory. However, the bandwidth of the off-chip memory is limited. When the bandwidth for writing to the off-chip memory exceeds the limit, the current practice is to automatically discard all or part of the messages that need to be stored in the off-chip memory, which will cause the problem of message discarding.

### SUMMARY

The main purpose of the present application is to provide a storage scheduling method, a storage scheduling apparatus, a storage scheduling device and a computer-readable storage medium, aiming to propose a storage scheduling scheme for on-chip memory and off-chip memory to reduce the message discard rate when the on-chip memory and the off-chip memory are cached in collaboration.

To achieve the above purpose, the present application provides a storage scheduling method, including the following steps:
obtaining a current first amount of space used of an on-chip memory, and obtaining a current write bandwidth of an off-chip memory;
determining a second queue from each first queue stored in the on-chip memory in response to that the first amount of space used is greater than a preset first threshold value and the write bandwidth is less than a preset second threshold value; the first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree; the queue congestion degree is evaluated according to a preset congestion degree evaluation index;
setting a storage state of the second queue to an off-chip state; and
storing a target message in a memory indicated by a storage state of a queue where the target message is located, the target message is a newly queued and unsaved message.

To achieve the above object, the present application further provides a storage scheduling apparatus, and the storage scheduling apparatus includes:
an obtaining module, configured for obtaining a current first amount of space used of an on-chip memory, and obtaining a current write bandwidth of an off-chip memory;
a determination module, configured for determining a second queue from each first queue stored in the on-chip memory in response to that the first amount of space used is greater than a preset first threshold value and the write bandwidth is less than a preset second threshold value; the first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree; the queue congestion degree is evaluated according to a preset congestion degree evaluation index;
a setting module, configured for setting a storage state of the second queue to an off-chip state; and
a storage module, configured for storing a target message in a memory indicated by a storage state of a queue where the target message is located, the target message is a newly queued and unsaved message.

To achieve the above-mentioned purpose, the present application further provides a storage scheduling device, the storage scheduling device includes: a memory, a processor, and a storage scheduling program stored in the memory and executable on the processor, and the storage scheduling method described above is implemented when the storage scheduling program is executed by the processor.

In addition, to achieve the above-mentioned purpose, the present application further proposes a computer-readable storage medium, a storage scheduling program is stored on the computer-readable storage medium, and the storage scheduling method described above is implemented when the storage scheduling program is executed by the processor.

In the present application, by obtaining a current first amount of space used of an on-chip memory, and obtaining a current write bandwidth of an off-chip memory; determining a second queue from each first queue stored in the on-chip memory in response to that the first amount of space used is greater than a preset first threshold value and the write bandwidth is less than a preset second threshold value; the first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree; the queue congestion degree is evaluated according to a preset congestion degree evaluation index; setting a storage state of the second queue to an off-chip state; and storing a target message in a memory indicated by a storage state of a queue where the target message is located, the target message is a newly queued and unsaved message. The present application proposes a storage scheduling scheme for an on-chip memory and an off-chip memory. When the on-chip memory is occupied by a high amount and the write bandwidth of the off-chip memory is not exceeded, the subsequent messages from the most congested queue in the on-chip memory are transferred to the off-chip memory for storage, so that the queue stored in the on-chip memory is a non-congested queue relative to the off-chip memory, thereby reducing the space occupied by the on-chip memory due to the congested queue, alleviating the storage pressure of the on-chip memory, thereby reducing the need to store messages in the off-chip memory, thereby avoiding the situation that discarding messages due to exceeding the write bandwidth of off-chip memory, that is, reducing the message discard rate when on-chip memory and off-chip memory are cached in a collaborative manner.

### BRIEF DESCRIPTION OF THE DRAWINGS

FIG. 1 is a structural schematic diagram of a hardware operating environment involved in an embodiment of the present application.
FIG. 2 is a flowchart of a storage scheduling method according to a first embodiment of the present application.
FIG. 3 is a principle schematic diagram of a sliding window speed measurement involved in an embodiment of the present application.
FIG. 4 is a schematic diagram of functional modules of a storage scheduling apparatus according to an embodiment of the present application.

The realization of the purpose, functional features and advantages of the present application will be further explained in combination with the embodiments and with reference to the accompanying drawings.

### DETAILED DESCRIPTION OF THE EMBODIMENTS

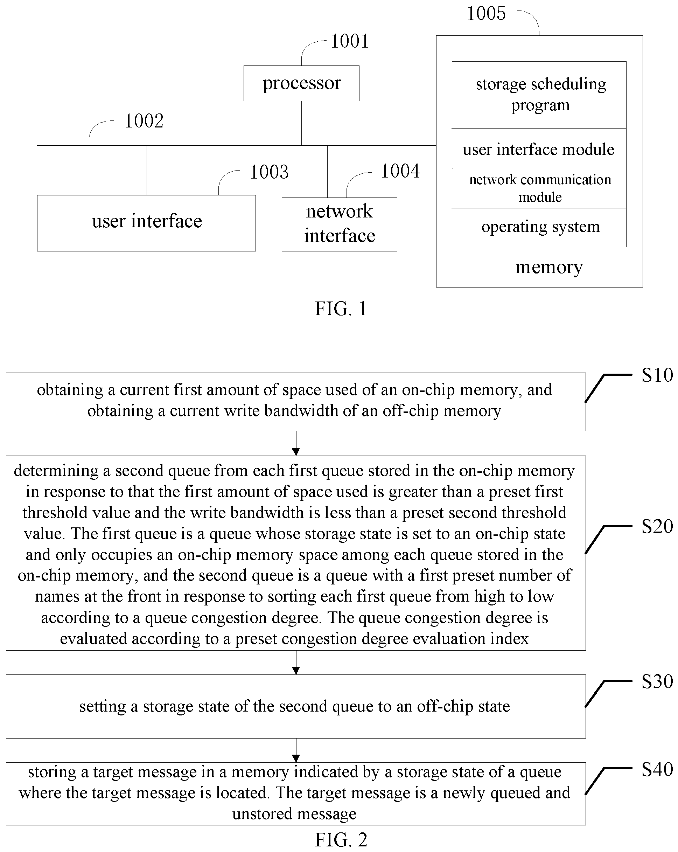

Referring to FIG. 1, FIG. 1 is a structural schematic diagram of a hardware operating environment involved in an embodiment of the present application.

It should be noted that the storage scheduling apparatus in the embodiment of the present application may be a smart phone, a personal computer, a server or other device, and no specific limitation is made here.

As shown in FIG. 1, the storage scheduling device includes: a processor 1001, such as a Central Processing Unit (CPU), a network interface 1004, a user interface 1003, a communication bus 1002 and a memory 1005. The communication bus 1002 is configured to realize connection communication among these components. The user interface 1003 may include a display and an input unit such as a keyboard. The user interface 1003 may further include a standard wired interface or a wireless interface. The network interface 1004 may include a standard wired interface or a wireless interface (such as a Wireless-Fidelity (Wi-Fi) interface). The memory 1005 can be a high-speed Random Access Memory (RAM), or a Non-volatile Memory (NVM), such as a disk memory. In an embodiment, the memory 1005 may further be a storage device independent of the aforementioned processor 1001.

As shown in FIG. 1, the memory 1005 as a computer storage medium includes an operating system, a network communication module, a user interface module, and a storage scheduling program. The operating system is a program that manages and controls the hardware and software resources of the device and supports the operation of the storage scheduling program and other software or programs. In the device shown in FIG. 1, the user interface 1003 is mainly configured for data communication with the client-side; the network interface 1004 is mainly configured for establishing a communication connection with the server; and the processor 1001 is configured for calling the storage scheduling program stored in the memory 1005, and performing the following steps:
obtaining a current first amount of space used of an on-chip memory, and obtaining a current write bandwidth of an off-chip memory.
determining a second queue from each first queue stored in the on-chip memory in response to that the first amount of space used is greater than a preset first threshold value and the write bandwidth is less than a preset second threshold value. The first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree. The queue congestion degree is evaluated according to a preset congestion degree evaluation index.
setting a storage state of the second queue to an off-chip state.
storing a target message in a memory indicated by a storage state of a queue where the target message is located, and the target message is a newly queued and unsaved message.

In an embodiment, the congestion evaluation index is an amount of space used of the queue, and the determining the second queue from each first queue stored in the on-chip memory includes:
obtaining a second amount of space used respectively corresponding to each first queue; and
taking a queue with the first preset number of names at the front in response to sorting each first queue from large to small according to the second amount of space used as the second queue.

In an embodiment, after the obtaining the current first amount of space used of the on-chip memory, and obtaining the current write bandwidth of the off-chip memory, the method further includes:
determining a fourth queue from each third queue stored in the off-chip memory in response to that the write bandwidth is greater than or equal to a preset third threshold; the third threshold is greater than or equal to the second threshold, the third queue is a queue whose storage state is set to the off-chip state among each queue stored in the off-chip memory, and the fourth queue is a queue with a second preset number of names at the front among each third queue in response to sorting from high to low according to the queue congestion degree; and
setting a storage state of the fourth queue to the on-chip state.

In an embodiment, the congestion evaluation index is an amount of space used of the queue, and the determining the fourth queue from each third queue stored in the off-chip memory includes:
obtaining a third amount of space used corresponding to each third queue respectively; the third amount of space used is sum of the amount of space used of the third queue in the on-chip memory and the amount of space used of the third queue in the off-chip memory; and
taking a queue with the second preset number of names at the front in response to sorting each third queue from small to large according to the third amount of space used as the fourth queue.

In an embodiment, the obtaining the current write bandwidth of the off-chip memory includes:
obtaining a currently recorded write bandwidth of the off-chip memory;
the storage scheduling method further includes:
   counting a first message length of a message written to the off-chip memory within the time window at an end of a time window; a length of the time window is a preset duration;
   dividing the first message length by the preset duration, and adopting a calculation result to update the currently recorded write bandwidth of the off-chip memory; and
   moving the time window backward on a time axis by a preset step length, and returning to execute the counting total number of bytes of the message written to the off-chip memory within the time window at the end of the time window.

In an embodiment, the preset duration is a preset multiple of the preset step length, and the counting the first message length of the message written to the off-chip memory within the time window includes:
accumulating a second message lengths corresponding to multiple small windows within the time window, and obtaining the first message length; a length of the small window is the preset step length, and the second message length is a length of the message written to the off-chip memory within the small window obtained by counting at an end of a corresponding small window.

In an embodiment, the obtaining the current first amount of space used of the on-chip memory, and obtaining the current write bandwidth of the off-chip memory includes:
obtaining the current first amount of space used of the on-chip memory, and obtaining the current write bandwidth of the off-chip memory in response to receiving the target message.

Based on the above-mentioned structure, various embodiments of the storage scheduling method are proposed.

Referring to FIG. 2, FIG. 2 is a flowchart of a storage scheduling method according to a first embodiment of the present application.

The embodiment of the present application provides an embodiment of the storage scheduling method. It should be noted that although the logical order is shown in the flowchart, in some cases, the steps shown or described can be performed in a different order than here. In this embodiment, the storage scheduling method can be applied to device that uses on-chip memory and off-chip memory to coordinate message caching, such as routers. For ease of description, the following description of each embodiment is omitted. In this embodiment, the storage scheduling method includes:
Step S10, obtaining a current first amount of space used of an on-chip memory, and obtaining a current write bandwidth of an off-chip memory.

In a specific implementation, the storage scheduling process in this embodiment can be executed once at a predetermined frequency; or, after receiving a corresponding trigger instruction, the storage scheduling process in this embodiment can be executed once in response to the instruction; or, after each time a newly queued message (hereinafter referred to as a target message for distinction) that has not yet been stored is received, the storage scheduling process in this embodiment can be executed once.

The following describes a specific embodiment by taking the example of executing the storage scheduling process in this embodiment once after each time a target message is received.

After receiving the target message, the current amount of space used (hereinafter referred to as the first amount of space used for distinction) of the on-chip memory can be obtained, and the current write bandwidth of the off-chip memory can be obtained. The calculation method of the write bandwidth of the off-chip memory is not limited in this embodiment. It can be calculated once and recorded every once in a while. After receiving the target message, obtaining the currently recorded write bandwidth for the subsequent storage scheduling process.

Step S20, determining a second queue from each first queue stored in the on-chip memory in response to that the first amount of space used is greater than a preset first threshold value and the write bandwidth is less than a preset second threshold value. The first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree. The queue congestion degree is evaluated according to a preset congestion degree evaluation index.

Preliminarily setting a threshold value (hereinafter referred to as the first threshold value to distinguish) for the amount of space used of the on-chip memory, the threshold value can be set to be less than or equal to the maximum capacity of the on-chip memory. In some embodiments, in order to leave some room for the storage space of the on-chip memory to cope with sudden situations, the threshold value can be set to be less than the maximum capacity of the on-chip memory.

Preliminarily setting a threshold value (hereinafter referred to as the second threshold value to distinguish) for the write bandwidth of the off-chip memory, and the threshold value can be set to be less than the maximum write bandwidth of the off-chip memory.

For each message queue, the storage state of each queue can be recorded separately. The storage state of a queue can be an on-chip state or an off-chip state. The on-chip state means that the newly queued messages added later in the queue need to be stored in the on-chip memory, and the off-chip state means that the newly queued messages added later in the queue need to be stored in the off-chip memory.

In a specific implementation, the initial storage state of the queue can be set to the on-chip state or the off-chip state as needed, which is not limited in this embodiment.

When the first amount of space used is greater than the first threshold value, and the write bandwidth is less than the second threshold value, it means that the on-chip memory can no longer accommodate new messages, but the write bandwidth of the off-chip memory has not yet exceeded the limit and will not be back-pressured. At this time, the second queue can be determined from each first queue stored in the on-chip memory. The first queue is a queue whose storage state is set to the on-chip state among each queue stored in the on-chip memory. Sorting each first queue from high to low according to the congestion degree, and taking the queue with the first preset number of names at the front as the second queue. The first preset number of names can be set as needed, and is not limited in this embodiment, for example, it is set to 1. The congestion degree of the first queue can be evaluated according to a preset congestion degree evaluation index. The congestion degree evaluation index can be set as needed, and is not limited in this embodiment. For example, it can be set to the amount of space used of the queue, that is, the larger the amount of space used, the more congested the queue is.

In an embodiment, the determining the second queue from each first queue stored in the on-chip memory in the step S20 includes:
Step S201, obtaining a second amount of space used respectively corresponding to each first queue.

When the congestion degree evaluation index is set to the amount of space used of the queue, the amount of space used corresponding to each first queue (hereinafter referred to as the second amount of space used for distinction) can be obtained.

Step S202, taking a queue with the first preset number of names at the front in response to sorting each first queue from large to small according to the second amount of space used as the second queue.

For example, there are three first queues a, b and c, and the corresponding second amount of space used are 100, 200, and 150 respectively. Sorting the first queues from large to small according to the second amount of space used: b, c, a. Assuming that the first preset number of names is 1, then b is selected as the second queue.

Step S30, setting a storage state of the second queue to an off-chip state.

After determining the second queue, setting the storage state of the second queue to the off-chip state, that is, changing from the original on-chip state to the off-chip state.

Step S40, storing a target message in a memory indicated by a storage state of a queue where the target message is located. The target message is a newly queued and unsaved message.

For the target message, the target message is stored in the memory indicated by the storage state of the queue where it is located, that is, when the storage state of the queue where the target message is located is the off-chip state, the target message is stored in the off-chip memory, and when the storage state of the queue where the target message is located is the on-chip state, the target message is stored in the on-chip memory.

It should be noted that, in a specific implementation, it can be that after each time a target message is received, first performing the threshold value judgment and the storage state modification process, and then storing the target message; or it also can be that after receiving each target message and storing the target message, then performing the threshold value judgment and the storage state modification process.

In this embodiment, for the case where the first amount of space used is less than or equal to the first threshold value, and the write bandwidth is greater than or equal to the second threshold value, whether the storage state of each queue is changed and how it is changed is not limited, and it can be set as needed in the specific implementation. For example, in an embodiment, when the first amount of space used is less than or equal to the first threshold value, or the write bandwidth is greater than or equal to the second threshold value, the storage state of each queue may not be changed. For another example, in another embodiment, when the first amount of space used is less than or equal to the first threshold value, or the write bandwidth is greater than or equal to the second threshold value, other trigger conditions may be set to be determined, and performing the corresponding storage state change operation when the trigger conditions are met.

In this embodiment, by obtaining a current first amount of space used of an on-chip memory, and obtaining a current write bandwidth of an off-chip memory; determining a second queue from each first queue stored in the on-chip memory in response to that the first amount of space used is greater than a preset first threshold value and the write bandwidth is less than a preset second threshold value; the first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree; the queue congestion degree is evaluated according to a preset congestion degree evaluation index; setting a storage state of the second queue to an off-chip state; and storing a target message in a memory indicated by a storage state of a queue where the target message is located, the target message is a newly queued and unsaved message. The present embodiment proposes a storage scheduling scheme for an on-chip memory and an off-chip memory. When the on-chip memory is occupied by a high amount and the write bandwidth of the off-chip memory is not exceeded, the subsequent messages from the most congested queue in the on-chip memory are transferred to the off-chip memory for storage, so that the queue stored in the on-chip memory is a non-congested queue relative to the off-chip memory, thereby reducing the space occupied by the on-chip memory due to the congested queue, alleviating the storage pressure of the on-chip memory, thereby reducing the need to store messages in the off-chip memory, thereby avoiding the situation that discarding messages due to exceeding the write bandwidth of off-chip memory, that is, reducing the message discard rate when on-chip memory and off-chip memory are cached in a collaborative manner.

Based on the above-mentioned first embodiment, proposing a second embodiment of the storage scheduling method of the present application. In this embodiment, after step S10, the method further includes:
Step S50, determining a fourth queue from each third queue stored in the off-chip memory in response to that the write bandwidth is greater than or equal to a preset third threshold. The third threshold is greater than or equal to the second threshold, the third queue is a queue whose storage state is set to the off-chip state among each queue stored in the off-chip memory, and the fourth queue is a queue with a second preset number of names at the front among each third queue in response to sorting from high to low according to the queue congestion degree.

In this embodiment, in order to further reduce the message discard rate of the on-chip memory and the off-chip memory in the collaborative caching, and proposing a switchback mechanism for off-chip memory.

Preliminarily setting a third threshold value for the write bandwidth of the off-chip memory. The third threshold value can be set to be greater than or equal to the second threshold value.

When the write bandwidth is greater than or equal to the third threshold value, it means that the bandwidth pressure of the off-chip memory is large, and continued storage may cause back pressure. At this time, the fourth queue can be determined from the third queues stored in the off-chip memory. The third queue is a queue whose storage state is set to the off-chip state among each queue stored in the off-chip memory. It can be understood that a queue may have a part stored in the on-chip memory and a part stored in the off-chip memory. Then, the third queue may be stored entirely in the off-chip memory, or may be stored partially in the off-chip memory and partially in the on-chip memory. Sorting each third queue from low to high according to the congestion degree, and taking the queue with the second preset number of names at the front as the fourth queue. The second preset number of names can be set as needed, and is not limited in this embodiment, for example, it is set to 1. The second preset number of names and the first preset number of names can be set to be the same or different. The congestion degree of the third queue can also be evaluated according to the preset congestion degree evaluation index.

Step S60, setting a storage state of the fourth queue to the on-chip state.

After determining the fourth queue, setting the storage state of the fourth queue to the on-chip state, and the subsequent received messages of the fourth queue will be stored in the on-chip memory.

In this embodiment, by setting a switchback mechanism, when the write bandwidth of the off-chip memory is greater than a certain threshold value, the subsequent message of the least congested queue in the off-chip memory is transferred to the on-chip memory for storage. On the one hand, the demand for storing the message in the off-chip memory can be directly reduced. On the other hand, the effect that the queue stored in the on-chip memory is a non-congested queue relative to the off-chip memory can be further achieved, thereby further reducing the space occupied by the on-chip memory due to the congested queue, alleviating the storage pressure of the on-chip memory, thereby further reducing the demand for storing the message in the off-chip memory, and thus avoiding the situation that discarding messages due to exceeding the write bandwidth of off-chip memory, that is, reducing the message discard rate when on-chip memory and off-chip memory are cached in a collaborative manner.

In an embodiment, the determining the fourth queue from each third queue stored in the off-chip memory in step S50 includes:
Step S501, obtaining a third amount of space used corresponding to each third queue respectively; the third amount of space used is sum of the amount of space used of the third queue in the on-chip memory and the amount of space used of the third queue in the off-chip memory.

When the congestion degree evaluation index is set to be the amount of space used of the queue, the amount of space used corresponding to each the third queue (hereinafter referred to as the third amount of space used for distinction) respectively can be obtained. Since the third queue may be stored entirely in the off-chip memory, or partially in the off-chip memory and partially in the on-chip memory, the third amount of space used is the sum of the amount of space used of the third queue in the on-chip memory and the amount of space used of the third queue in the off-chip memory.

Step S502: taking a queue with the second preset number of names at the front in response to sorting each third queue from small to large according to the third amount of space used as the fourth queue.

For example, there are three third queues a, b and c, and the corresponding third amount of space used is 100, 200, 150 respectively. Sorting the first queue from small to large according to the third amount of space used: a, c, b. Assuming that the second preset number of names is 1, thus, a is selected as the fourth queue.

Based on the above-mentioned first embodiment and/or the second embodiment, a third embodiment of the storage scheduling method of the present application is proposed. In this embodiment, the obtaining the current write bandwidth of the off-chip memory in the step S10 includes:
Step S101, obtaining a currently recorded write bandwidth of the off-chip memory.

In this embodiment, in order to improve the accuracy of the measurement result of the write bandwidth, proposing a sliding window speed measurement method to calculate the write bandwidth of the off-chip memory, and after each time the write bandwidth is calculated, recording the latest calculated write bandwidth, and when the write bandwidth needs to be obtained, obtaining the latest currently recorded write bandwidth.

The storage scheduling method further includes:
Step S70, counting a first message length of a message written to the off-chip memory within the time window at an end of a time window. A length of the time window is a preset duration.

The sliding window speed measurement method is to preset a time window, the length of the time window is a preset duration preset. Sliding the time window on the time axis, with a preset step length each time. Each sliding is at the end of the time window, that is, sliding the time window backward by the preset step length when the current time reaches the end time point of the time window. The preset duration and the preset step length can be set as needed, and are not limited in this embodiment.

At the end of the time window, first counting the message length (called the first message length for distinction) of the message written to the off-chip memory in the time window. For example, when the time window currently corresponds to the time period of 1 o'clock 1 minute 1000 nanoseconds to 1 o'clock 1 minute 2000 nanoseconds on the time axis, then when reaching 1 o'clock 1 minute 2000 nanoseconds, counting the message length of the message written to the off-chip memory in the time period of 1 o'clock 1 minute 1000 nanoseconds to 1 o'clock 1 minute 2000 nanoseconds.

Step S80, dividing the first message length by the preset duration, and adopting a calculation result to update the currently recorded write bandwidth of the off-chip memory.

Dividing the first message length by the preset duration to obtain the latest calculated write bandwidth, and adopting the write bandwidth to update the currently recorded write bandwidth.

Step S90, moving the time window backward on a time axis by a preset step length, and returning to execute the counting total number of bytes of the message written to the off-chip memory within the time window at the end of the time window.

After updating the write bandwidth, moving the time window backward on the time axis (that is, sliding) by a preset step length. For example, the preset step length is 100 nanoseconds. Assuming that the time window currently corresponds to the time period from 1 o'clock 1 minute 1000 nanoseconds to 1 o'clock 1 minute 2000 nanoseconds on the time axis, after sliding, the time window corresponds to the time period from 1 o'clock 1 minute 1100 nanoseconds to 1 o'clock 1 minute 2100 nanoseconds on the time axis. After sliding the time window, at the end of the sliding time window, recalculating the new write bandwidth.

In an embodiment, the preset duration is a preset multiple of the preset step length, and the step S70 includes:
Step S701, accumulating a second message lengths corresponding to multiple small windows within the time window, and obtaining the first message length. A length of the small window is the preset step length, and the second message length is a length of the message written to the off-chip memory within the small window obtained by counting at an end of a corresponding small window.

In order to improve the write bandwidth measurement speed of the off-chip memory, dividing the time window into multiple small windows, the length of the small window is the preset step length, and the length of the time window, that is, the preset duration is a preset multiple of the preset step length. The preset multiple can be set as needed, for example, set to 10. At the end of the small window, that is, when the current time point reaches the end time point of the small window, counting the message length (hereinafter referred to as the second message length for distinction) written to the off-chip memory in the small window. Then, at the end of each time window, only the second message length corresponding to the last small window needs to be counted, thereby improving the measurement speed of the write bandwidth. At the same time, the length of the time window is relatively long, which can ensure the accuracy of the calculated write bandwidth.

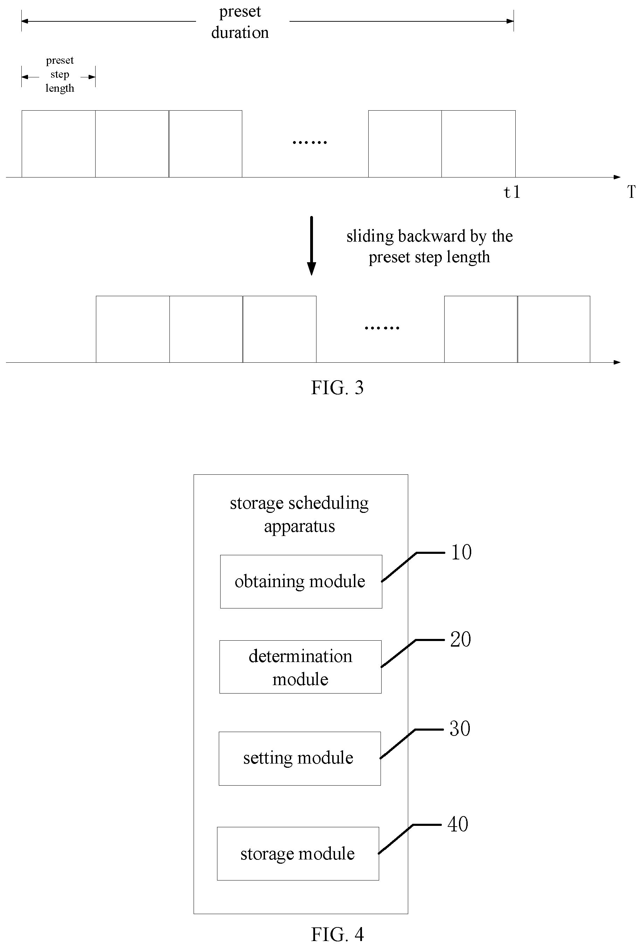

As shown in FIG. 3, a time window with a length of preset duration on the time axis is schematically drawn. The time window can be regarded as composed of multiple small windows with a length of preset step length. When the current time reaches the end time point t1 of the current time window, counting the first message length of the message written to the off-chip memory in the current time window (adding the second message length corresponding to each small window), and calculating the latest write bandwidth according to the first message length, and then sliding the time window backward by the preset step length.

In addition, the embodiment of the present application further proposes a storage scheduling apparatus. Referring to FIG. 4, the storage scheduling apparatus includes an obtaining module 10, a determination module 20, a setting module 30 and a storage module 40.

The obtaining module 10 is configured for obtaining a current first amount of space used of an on-chip memory, and obtaining a current write bandwidth of an off-chip memory.

The determination module 20 is configured for determining a second queue from each first queue stored in the on-chip memory in response to that the first amount of space used is greater than a preset first threshold value and the write bandwidth is less than a preset second threshold value. The first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree; the queue congestion degree is evaluated according to a preset congestion degree evaluation index.

The setting module 30 is configured for setting a storage state of the second queue to an off-chip state.

The storage module 40 is configured for storing a target message in a memory indicated by a storage state of a queue where the target message is located, the target message is a newly queued and unsaved message.

In an embodiment, the congestion evaluation index is an amount of space used of the queue, and the determination module 20 is further configured for:
obtaining a second amount of space used respectively corresponding to each first queue; and
taking a queue with the first preset number of names at the front in response to sorting each first queue from large to small according to the second amount of space used as the second queue.

In an embodiment, the determination module 20 is further configured for:
determining a fourth queue from each third queue stored in the off-chip memory in response to that the write bandwidth is greater than or equal to a preset third threshold. The third threshold is greater than or equal to the second threshold, the third queue is a queue whose storage state is set to the off-chip state among each queue stored in the off-chip memory, and the fourth queue is a queue with a second preset number of names at the front among each third queue in response to sorting from high to low according to the queue congestion degree.

The setting module 30 is further configured for setting a storage state of the fourth queue to the on-chip state.

In an embodiment, the congestion evaluation index is an amount of space used of the queue, and the determination module 20 is further configured for:
obtaining a third amount of space used corresponding to each third queue respectively; the third amount of space used is sum of the amount of space used of the third queue in the on-chip memory and the amount of space used of the third queue in the off-chip memory; and
taking a queue with the second preset number of names at the front in response to sorting each third queue from small to large according to the third amount of space used as the fourth queue.

In an embodiment, the obtaining module 10 is further configured for:
obtaining a currently recorded write bandwidth of the off-chip memory.

The storage scheduling apparatus further includes a statistical module, an update module and a moving module.

The statistical module is configured for counting a first message length of a message written to the off-chip memory within the time window at an end of a time window; a length of the time window is a preset duration;

The update module is configured for dividing the first message length by the preset duration, and adopting a calculation result to update the currently recorded write bandwidth of the off-chip memory; and
The moving module is configured for moving the time window backward on a time axis by a preset step length, and returning to execute the counting total number of bytes of the message written to the off-chip memory within the time window at the end of the time window.

In an embodiment, the preset duration is a preset multiple of the preset step length, and the statistical module is further configured for:
accumulating a second message lengths corresponding to multiple small windows within the time window, and obtaining the first message length. A length of the small window is the preset step length, and the second message length is a length of the message written to the off-chip memory within the small window obtained by counting at an end of a corresponding small window.

In an embodiment, the obtaining module 10 is further configured for:
obtaining the current first amount of space used of the on-chip memory, and obtaining the current write bandwidth of the off-chip memory in response to receiving the target message.

The extended content of the specific implementation of the storage scheduling apparatus of the present application is basically the same as the above-mentioned embodiments of the storage scheduling method, and will not be repeated here.

In addition, the embodiment of the present application further proposes a computer-readable storage medium, a storage scheduling program is stored on the computer-readable storage medium, and the storage scheduling method described below are implemented when the storage scheduling program is executed by the processor.

The various embodiments of the storage scheduling device and computer-readable storage medium of the present application can refer to the various embodiments of the storage scheduling method of the present application, which will not be repeated here.

It should be noted that in this article, the terms "comprise", "include" or any other variation thereof are intended to cover a non-exclusive inclusion, such that a process, method, article or device that includes a list of elements not only includes those elements, but also includes other elements not expressly listed, or also includes elements inherent to the process, method, article or device. In a case of without further restrictions, an element defined by the statement "include a/an......" does not exclude the existence of other identical elements in a process, method, article or device that includes this element.

It should be noted that the above serial numbers of the embodiments of the present application are only for description and do not represent the advantages and disadvantages of the embodiments.

By the above description of the embodiments, those skilled in the art can clearly understand that the methods of the above embodiments can be implemented by means of software plus the necessary general hardware platform, and they can also be done by hardware certainly, but in many cases the former is the better implementation. Based on this understanding, the technical solution of the present application essentially or the part that contributes to the related art can be embodied in the form of a software product, the computer software product is stored in a storage medium (such as Read Only Memory (ROM)/Random Access Memory (RAM), diskette, optical disk), which includes several instructions to cause a terminal device (which can be a mobile phone, computer, server, or network device, etc.) to execute the methods described in various embodiments of the present application.

## Claims

1. A storage scheduling method, **characterized by** comprising:
(S10), obtaining a current first amount of space used of an on-chip memory, and obtaining a current write bandwidth of an off-chip memory;
(S20), determining a second queue from each first queue stored in the on-chip memory in response to that the first amount of space used is greater than a preset first threshold value and the write bandwidth is less than a preset second threshold value; wherein the first queue is a queue whose storage state is set to an on-chip state and only occupies an on-chip memory space among each queue stored in the on-chip memory, and the second queue is a queue with a first preset number of names at the front in response to sorting each first queue from high to low according to a queue congestion degree; the queue congestion degree is evaluated according to a preset congestion degree evaluation index;
(S30), setting a storage state of the second queue to an off-chip state; and
(S40), storing a target message in a memory indicated by a storage state of a queue where the target message is located, wherein the target message is a newly queued and unsaved message.

2. The storage scheduling method according to claim 1, wherein the congestion evaluation index is an amount of space used of the queue, and the determining the second queue from each first queue stored in the on-chip memory comprises:
obtaining a second amount of space used respectively corresponding to each first queue; and
taking a queue with the first preset number of names at the front in response to sorting each first queue from large to small according to the second amount of space used as the second queue.

3. The storage scheduling method according to claim 1, wherein after the obtaining the current first amount of space used of the on-chip memory, and obtaining the current write bandwidth of the off-chip memory, the method further comprises:
determining a fourth queue from each third queue stored in the off-chip memory in response to that the write bandwidth is greater than or equal to a preset third threshold; wherein the third threshold is greater than or equal to the second threshold, the third queue is a queue whose storage state is set to the off-chip state among each queue stored in the off-chip memory, and the fourth queue is a queue with a second preset number of names at the front among each third queue in response to sorting from high to low according to the queue congestion degree; and
setting a storage state of the fourth queue to the on-chip state.

4. The storage scheduling method according to claim 3, wherein the congestion evaluation index is an amount of space used of the queue, and the determining the fourth queue from each third queue stored in the off-chip memory comprises:
obtaining a third amount of space used corresponding to each third queue respectively; the third amount of space used is sum of the amount of space used of the third queue in the on-chip memory and the amount of space used of the third queue in the off-chip memory; and
taking a queue with the second preset number of names at the front in response to sorting each third queue from small to large according to the third amount of space used as the fourth queue.

5. The storage scheduling method according to claim 1, wherein the obtaining the current write bandwidth of the off-chip memory comprises:
obtaining a currently recorded write bandwidth of the off-chip memory;
the storage scheduling method further comprises:
counting a first message length of a message written to the off-chip memory within the time window at an end of a time window; wherein a length of the time window is a preset duration;
dividing the first message length by the preset duration, and adopting a calculation result to update the currently recorded write bandwidth of the off-chip memory; and
moving the time window backward on a time axis by a preset step length, and returning to execute the counting total number of bytes of the message written to the off-chip memory within the time window at the end of the time window.

6. The storage scheduling method according to claim 5, wherein the preset duration is a preset multiple of the preset step length, and the counting the first message length of the message written to the off-chip memory within the time window comprises:
accumulating a second message lengths corresponding to multiple small windows within the time window, and obtaining the first message length; wherein a length of the small window is the preset step length, and the second message length is a length of the message written to the off-chip memory within the small window obtained by counting at an end of a corresponding small window.

7. The storage scheduling method according to any one of claims 1 to 6, wherein the obtaining the current first amount of space used of the on-chip memory, and obtaining the current write bandwidth of the off-chip memory comprises:
obtaining the current first amount of space used of the on-chip memory, and obtaining the current write bandwidth of the off-chip memory in response to receiving the target message.

8. A storage scheduling device, **characterized by** comprising:
a memory (1005);
a processor (1001); and
a storage scheduling program stored in the memory (1005) and executable on the processor (1001),
wherein the storage scheduling method according to any one of claims 1 to 7 is implemented when the storage scheduling program is executed by the processor (1001).

9. A computer-readable storage medium, **characterized in that** a storage scheduling program is stored on the computer-readable storage medium, and the storage scheduling method according to any one of claims 1 to 7 is implemented when the storage scheduling program is executed by a processor (1001).

## Patentansprüche

1. Speicherplanungsverfahren, **dadurch gekennzeichnet, dass** es umfasst:
(S10) Erhalten einer aktuellen ersten Menge an belegtem Speicherplatz eines On-Chip-Speichers und Erhalten einer aktuellen Schreibbandbreite eines Off-Chip-Speichers;
(S20) Bestimmen einer zweiten Warteschlange aus jeder im On-Chip-Speicher gespeicherten ersten Warteschlange als Reaktion darauf, dass die erste Menge an belegtem Speicherplatz größer als ein voreingestellter erster Schwellenwert ist und die Schreibbandbreite geringer als ein voreingestellter zweiter Schwellenwert ist; wobei die erste Warteschlange eine Warteschlange ist, deren Speicherzustand auf einen On-Chip-Zustand eingestellt ist und die unter jeder im On-Chip-Speicher gespeicherten Warteschlange nur einen On-Chip-Speicherplatz belegt, und die zweite Warteschlange eine Warteschlange mit einer ersten voreingestellten Anzahl von Namen an der Spitze als Reaktion auf das Sortieren jeder ersten Warteschlange von hoch nach niedrig gemäß einem Warteschlangenüberlastungsgrad ist; wobei der Warteschlangenüberlastungsgrad gemäß einem voreingestellten Überlastungsgrad-Bewertungsindex bewertet wird;
(S30) Einstellen eines Speicherzustands der zweiten Warteschlange auf einen Off-Chip-Zustand; und
(S40) Speichern einer Zielnachricht in einem Speicher, der durch einen Speicherzustand einer Warteschlange angegeben wird, in der sich die Zielnachricht befindet, wobei die Zielnachricht eine neu in die Warteschlange eingereihte und nicht gespeicherte Nachricht ist.

2. Speicherplanungsverfahren nach Anspruch 1, wobei der Überlastungs-Bewertungsindex eine Menge an belegtem Speicherplatz der Warteschlange ist und das Bestimmen der zweiten Warteschlange aus jeder im On-Chip-Speicher gespeicherten ersten Warteschlange umfasst:
Erhalten einer jeweils jeder ersten Warteschlange entsprechenden zweiten Menge an belegtem Speicherplatz; und
Heranziehen einer Warteschlange mit der ersten voreingestellten Anzahl von Namen an der Spitze als Reaktion auf das Sortieren jeder ersten Warteschlange von groß nach klein gemäß der zweiten Menge an belegtem Speicherplatz als die zweite Warteschlange.

3. Speicherplanungsverfahren nach Anspruch 1, wobei das Verfahren nach dem Erhalten der aktuellen ersten Menge an belegtem Speicherplatz des On-Chip-Speichers und dem Erhalten der aktuellen Schreibbandbreite des Off-Chip-Speichers ferner umfasst:
Bestimmen einer vierten Warteschlange aus jeder im Off-Chip-Speicher gespeicherten dritten Warteschlange als Reaktion darauf, dass die Schreibbandbreite größer oder gleich einem voreingestellten dritten Schwellenwert ist; wobei der dritte Schwellenwert größer oder gleich dem zweiten Schwellenwert ist, die dritte Warteschlange eine Warteschlange unter jeder im Off-Chip-Speicher gespeicherten Warteschlange ist, deren Speicherzustand auf den Off-Chip-Zustand eingestellt ist, und die vierte Warteschlange eine Warteschlange mit einer zweiten voreingestellten Anzahl von Namen an der Spitze unter jeder dritten Warteschlange als Reaktion auf das Sortieren von hoch nach niedrig gemäß dem Warteschlangenüberlastungsgrad ist; und
Einstellen eines Speicherzustands der vierten Warteschlange auf den On-Chip-Zustand.

4. Speicherplanungsverfahren nach Anspruch 3, wobei der Überlastungs-Bewertungsindex eine Menge an belegtem Speicherplatz der Warteschlange ist und das Bestimmen der vierten Warteschlange aus jeder im Off-Chip-Speicher gespeicherten dritten Warteschlange umfasst:
Erhalten einer jeweils jeder dritten Warteschlange entsprechenden dritten Menge an belegtem Speicherplatz; wobei die dritte Menge an belegtem Speicherplatz die Summe der Menge an belegtem Speicherplatz der dritten Warteschlange im On-Chip-Speicher und der Menge an belegtem Speicherplatz der dritten Warteschlange im Off-Chip-Speicher ist; und
Heranziehen einer Warteschlange mit der zweiten voreingestellten Anzahl von Namen an der Spitze als Reaktion auf das Sortieren jeder dritten Warteschlange von klein nach groß gemäß der dritten Menge an belegtem Speicherplatz als die vierte Warteschlange.

5. Speicherplanungsverfahren nach Anspruch 1, wobei das Erhalten der aktuellen Schreibbandbreite des Off-Chip-Speichers umfasst:
Erhalten einer aktuell aufgezeichneten Schreibbandbreite des Off-Chip-Speichers;
wobei das Speicherplanungsverfahren ferner umfasst:
Zählen einer ersten Nachrichtenlänge einer innerhalb des Zeitfensters in den Off-Chip-Speicher geschriebenen Nachricht am Ende eines Zeitfensters; wobei eine Länge des Zeitfensters eine voreingestellte Dauer ist;
Dividieren der ersten Nachrichtenlänge durch die voreingestellte Dauer und Verwenden eines Berechnungsergebnisses zum Aktualisieren der aktuell aufgezeichneten Schreibbandbreite des Off-Chip-Speichers; und
Bewegen des Zeitfensters auf einer Zeitachse um eine voreingestellte Schrittlänge nach hinten und Zurückkehren zum Ausführen des Zählens der Gesamtzahl der Bytes der innerhalb des Zeitfensters in den Off-Chip-Speicher geschriebenen Nachricht am Ende des Zeitfensters.

6. Speicherplanungsverfahren nach Anspruch 5, wobei die voreingestellte Dauer ein voreingestelltes Vielfaches der voreingestellten Schrittlänge ist und das Zählen der ersten Nachrichtenlänge der innerhalb des Zeitfensters in den Off-Chip-Speicher geschriebenen Nachricht umfasst:
Akkumulieren zweiter Nachrichtenlängen, die mehreren kleinen Fenstern innerhalb des Zeitfensters entsprechen, und Erhalten der ersten Nachrichtenlänge; wobei eine Länge des kleinen Fensters die voreingestellte Schrittlänge ist und die zweite Nachrichtenlänge eine Länge der innerhalb des kleinen Fensters in den Off-Chip-Speicher geschriebenen Nachricht ist, die durch Zählen am Ende eines entsprechenden kleinen Fensters erhalten wird.

7. Speicherplanungsverfahren nach einem der Ansprüche 1 bis 6, wobei das Erhalten der aktuellen ersten Menge an belegtem Speicherplatz des On-Chip-Speichers und das Erhalten der aktuellen Schreibbandbreite des Off-Chip-Speichers umfasst:
Erhalten der aktuellen ersten Menge an belegtem Speicherplatz des On-Chip-Speichers und Erhalten der aktuellen Schreibbandbreite des Off-Chip-Speichers als Reaktion auf den Empfang der Zielnachricht.

8. Speicherplanungsvorrichtung, **dadurch gekennzeichnet, dass** sie umfasst:
einen Speicher (1005);
einen Prozessor (1001); und
ein Speicherplanungsprogramm, das in dem Speicher (1005) gespeichert ist und auf dem Prozessor (1001) ausführbar ist,
wobei das Speicherplanungsverfahren nach einem der Ansprüche 1 bis 7 implementiert wird, wenn das Speicherplanungsprogramm durch den Prozessor (1001) ausgeführt wird.

9. Computerlesbares Speichermedium, **dadurch gekennzeichnet, dass** ein Speicherplanungsprogramm auf dem computerlesbaren Speichermedium gespeichert ist und das Speicherplanungsverfahren nach einem der Ansprüche 1 bis 7 implementiert wird, wenn das Speicherplanungsprogramm durch einen Prozessor (1001) ausgeführt wird.

## Revendications

1. Procédé de planification de stockage, **caractérisé en ce qu'**il comprend :
(S10), obtenir une première quantité actuelle d'espace utilisé d'une mémoire sur puce, et obtenir une bande passante d'écriture actuelle d'une mémoire hors puce;
(S20), déterminer une deuxième file d'attente à partir de chaque première file d'attente stockée dans la mémoire sur puce en réponse au fait que la première quantité d'espace utilisé est supérieure à une première valeur de seuil prédéfinie et que la bande passante d'écriture est inférieure à une deuxième valeur de seuil prédéfinie ; dans lequel la première file d'attente est une file d'attente dont l'état de stockage est défini à un état sur puce et n'occupe qu'un espace de mémoire sur puce parmi chaque file d'attente stockée dans la mémoire sur puce, et la deuxième file d'attente est une file d'attente avec un premier nombre prédéfini de noms à l'avant en réponse au tri de chaque première file d'attente de haut en bas selon un degré de congestion de file d'attente ; le degré de congestion de file d'attente est évalué selon un indice d'évaluation de degré de congestion prédéfini;
(S30), définir un état de stockage de la deuxième file d'attente à un état hors puce; et
(S40), stocker un message cible dans une mémoire indiquée par un état de stockage d'une file d'attente où se trouve le message cible, dans lequel le message cible est un message nouvellement mis en file d'attente et non enregistré.

2. Procédé de planification de stockage selon la revendication 1, dans lequel l'indice d'évaluation de congestion est une quantité d'espace utilisé de la file d'attente, et la détermination de la deuxième file d'attente à partir de chaque première file d'attente stockée dans la mémoire sur puce comprend :
obtenir une deuxième quantité d'espace utilisé correspondant respectivement à chaque première file d'attente; et
prendre une file d'attente avec le premier nombre prédéfini de noms à l'avant en réponse au tri de chaque première file d'attente par ordre décroissant selon la deuxième quantité d'espace utilisé comme deuxième file d'attente.

3. Procédé de planification de stockage selon la revendication 1, dans lequel après l'obtention de la première quantité actuelle d'espace utilisé de la mémoire sur puce, et l'obtention de la bande passante d'écriture actuelle de la mémoire hors puce, le procédé comprend en outre :
déterminer une quatrième file d'attente à partir de chaque troisième file d'attente stockée dans la mémoire hors puce, en réponse au fait que la bande passante d'écriture est supérieure ou égale à une troisième valeur de seuil prédéfinie; dans lequel la troisième valeur de seuil est supérieure ou égale à la deuxième valeur de seuil, la troisième file d'attente est une file d'attente dont l'état de stockage est défini sur l'état hors puce parmi chaque file d'attente stockée dans la mémoire hors puce, et la quatrième file d'attente est une file d'attente comportant un deuxième nombre prédéfini de noms en tête parmi chaque troisième file d'attente en réponse au tri par ordre décroissant selon le degré de congestion de file d'attente; et
définir un état de stockage de la quatrième file d'attente à l'état sur puce.

4. Procédé de planification de stockage selon la revendication 3, dans lequel l'indice d'évaluation de congestion est une quantité d'espace utilisé de la file d'attente, et la détermination de la quatrième file d'attente à partir de chaque troisième file d'attente stockée dans la mémoire hors puce comprend:
obtenir une troisième quantité d'espace utilisé correspondant à chaque troisième file d'attente respectivement ; la troisième quantité d'espace utilisé est la somme de la quantité d'espace utilisé de la troisième file d'attente dans la mémoire sur puce et de la quantité d'espace utilisé de la troisième file d'attente dans la mémoire hors puce; et
prendre une file d'attente avec le deuxième nombre prédéfini de noms en tête en réponse au tri de chaque troisième file d'attente par ordre croissant selon la troisième quantité d'espace utilisé, en tant que quatrième file d'attente.

5. Procédé de planification de stockage selon la revendication 1, dans lequel l'obtention de la bande passante d'écriture actuelle de la mémoire hors puce comprend:
obtenir une bande passante d'écriture actuellement enregistrée de la mémoire hors puce;
le procédé de planification de stockage comprend en outre :
compter une première longueur de message d'un message écrit dans la mémoire hors puce dans la fenêtre temporelle à la fin d'une fenêtre temporelle; dans lequel une longueur de la fenêtre temporelle est une durée prédéfinie;
diviser la première longueur de message par la durée prédéfinie, et adopter un résultat de calcul pour mettre à jour la bande passante d'écriture actuellement enregistrée de la mémoire hors puce; et
déplacer la fenêtre temporelle vers l'arrière sur un axe temporel d'une longueur de pas prédéfinie, et retourner pour exécuter le comptage du nombre total d'octets du message écrit dans la mémoire hors puce au sein de la fenêtre temporelle à la fin de la fenêtre temporelle.

6. Procédé de planification de stockage selon la revendication 5, dans lequel la durée prédéfinie est un multiple prédéfini de la longueur de pas prédéfinie, et le comptage de la première longueur de message du message écrit dans la mémoire hors puce au sein de la fenêtre temporelle comprend:
accumuler une deuxième longueur de message correspondant à une pluralité de petites fenêtres au sein de la fenêtre temporelle, et obtenir la première longueur de message; dans lequel une longueur de la petite fenêtre est la longueur de pas prédéfinie, et la deuxième longueur de message est une longueur du message écrit dans la mémoire hors puce au sein de la petite fenêtre obtenue par comptage à la fin d'une petite fenêtre correspondante.

7. Procédé de planification de stockage selon l'une quelconque des revendications 1 à 6, dans lequel l'obtention de la première quantité actuelle d'espace utilisé de la mémoire sur puce, et l'obtention de la bande passante d'écriture actuelle de la mémoire hors puce comprend:
obtenir la première quantité actuelle d'espace utilisé de la mémoire sur puce, et obtenir la bande passante d'écriture actuelle de la mémoire hors puce en réponse à la réception du message cible.

8. Dispositif de planification de stockage, **caractérisé en ce qu'**il comprend :
une mémoire (1005);
un processeur (1001); et
un programme de planification de stockage stocké dans la mémoire (1005) et exécutable sur le processeur (1001),
dans lequel le procédé de planification de stockage selon l'une quelconque des revendications 1 à 7 est mis en œuvre lorsque le programme de planification de stockage est exécuté par le processeur (1001).

9. Support de stockage lisible par ordinateur, **caractérisé en ce qu'**un programme de planification de stockage est stocké sur le support de stockage lisible par ordinateur, et le procédé de planification de stockage selon l'une quelconque des revendications 1 à 7 est mis en œuvre lorsque le programme de planification de stockage est exécuté par un processeur (1001).
